# EUROPEAN PATENT APPLICATION

(11) **EP 4 534 362 A1**
(43) Date of publication of application: **09.04.2025**
(21) Application number: 23202246.7
(22) Date of filing: 06.10.2023
(51) Int. Cl.: B60R 21/36

(54) **AIR BAG FOR A VEHICLE**

(71) Applicant: Volvo Car Corporation, 405 31 Göteborg (SE)
(72) Inventor: FREDRIKSSON, Anders, 40531 Göteborg (SE); TONBRING, Miriam, 40531 Göteborg (SE)
(74) Representative: Maiwald GmbH

(57) **Abstract**

The disclosure relates to an air bag (11) for a vehicle (1), the air bag (11) being inflatable from an uninflated state to an inflated state, the air bag (11) comprising a first portion (12) and a second portion (13), the first portion (12) and the second portion (13) being configured to form an outer surface of the air bag (11) in the inflated state of the air bag (11), the first portion (12) comprising a metal material, and the second portion (13) being configured as an exterior body component for a vehicle body (2) of the vehicle (1) in the uninflated state of the air bag (11).

## Description

### TECHNICAL FIELD

The present disclosure relates to an air bag for a vehicle, a vehicle arrangement comprising the air bag and a vehicle comprising the air bag or air bag arrangement.

### BACKGROUND ART

It is desirable to protect vulnerable road users, such as pedestrians or cyclist, as best as possible from being injured when they are involved in an accident with a vehicle. Generally, usage of external air bags in vehicles provides a solution which may mitigate or prevent injuries of vulnerable road users upon impact with the vehicle. However, the introduction of such external air bags in vehicles may not only be expensive but its design may be bulky and ineffective, thereby preventing them from being used in vehicles.

### SUMMARY

The problem is at least partially solved or alleviated by the subject matter of the independent claims of the present disclosure, wherein further examples are incorporated in the dependent claims.

According to a first aspect, there is provided an air bag for a vehicle, the air bag being inflatable from an uninflated state to an inflated state. The air bag comprises a first portion and a second portion. The first portion and the second portion are configured to form an outer surface of the air bag in the inflated state of the air bag. The first portion comprises a metal material. The second portion is configured as an exterior body component for a vehicle body of the vehicle in the uninflated state of the air bag.

Accordingly, the air bag is a type of metal air bag utilizing a portion of the air bag as an exterior body component as well as for the purpose of protecting a vulnerable road user upon impact because it forms the outer surface of the inflated air bag. The metal design of at least the first portion of the air bag may allow for a compact and cost-effective design as, for SE:AFE example, it may consist of one or more thin sheets of metal rather than having a bulky fabric air bag. Further, the metal design of the air bag may add to the structural strength of the vehicle body at the location of the vehicle body, where the exterior body component is located.

The air bag of this disclosure may also be referred to as an external air bag as it may be used to deploy the air bag externally of the vehicle and to protect a vulnerable road user in an accident as explained above. The external body component of the vehicle body is located externally on the vehicle body and thus may be visible when looking at the vehicle body or vehicle. In this case, the exterior body component may also be referred to as a visible body component since it forms a visible part of the vehicle body when looking at the vehicle body or vehicle. The first portion of the air bag on the other hand side may be a non-visible part, i.e., when looking at the vehicle body or vehicle. In particular, the first portion may be covered by the second portion as will be explained in more detail further below.

The air bag may have two states, between which the air bag may be transitioned by inflation thereof. One state of the air bag is herein referred to as an uninflated state. In the uninflated state, the air bag may be ready for deployment and the vehicle body component may be arranged at the rest of the vehicle body, i.e., at one or more further body components, in particular to form part of the vehicle body. Another state of the air bag is herein referred to as an inflated state. In this state, the air bag may be at least partially or fully inflated, and the second portion may have been pushed away from the vehicle body such that it may be located at a distance, defined by the size of the inflated air bag and the size of the second portion, from the rest of the vehicle body. The second portion may form a cushioning zone for a vulnerable road user upon impact on the air bag.

In an example, the exterior body component may be configured to form at least part of an A-pillar structure of the vehicle body. The A-pillar structure of the vehicle body has typically little space for an air bag and thus benefits from the compact arrangement of the air bag of this disclosure. Also, the A-pillar structure has been found to be potentially dangerous to vulnerable road users when an accident occurs such that using the air bag of this disclosure in the A-pillar structure may be particularly beneficial to protect vulnerable road users from injuries as much as possible.

In an example, the first portion and the second portion may be configured as respectively separate components. For example, this allows to provide different materials, material thicknesses etc. of the first portion and the second portion in a simple manner. For example, the material thickness may be lower for the first portion, whereas it may be higher for the second portion configured as the exterior body component. Thereby, weight and costs on the first portion may be saved, whereas the second portion may be provided with sufficient material thickness to correspond to the rest of the vehicle body. However, the first portion may be attached to the second portion. Specifically, the second portion may be at least partially attached to the first portion in the uninflated state of the air bag such that the attachment, at least partially, is maintained when the air bag is inflated. Thereby, the exterior body component may be always secured to the air bag. This allows to use the exterior body component, as a component or portion which may be separate from the first portion. Accordingly, the first portion may form the nominal or actual air bag, and the second portion may form an additional cushioning part of the air bag. By implementing the exterior body component as portion of the air bag, a danger associated therewith to other road users, e.g., of becoming lose and hitting other road users, is reduced. Specifically, utilizing the exterior body component as additional protection when it is pushed away from the vehicle body and into the direction of inflation of the air bag and, thus, towards the vulnerable road user being impacted, provides for an additional protection of the vulnerable road user in addition to the air bag itself. Still, the design of the vehicle body component may be conventional, and no specific modifications may be required, e.g., providing predetermined breaking points on the exterior body component, which would allow for the air bag to be ejected. Instead, the entire exterior body component may be separated, e.g., lifted, from the rest of the vehicle body, e.g., one or more further body components, when the air bag is inflated or, in other words, deployed. For example, the exterior body component may not be attached to the vehicle body, in particular not in the uninflated state of the air bag and/or the inflated state of the air bag. For example, the exterior body component may be attached only via the first portion to the vehicle body, e.g., one or more other, in particular internal, body components, which may be visible or non-visible. Advantageously, the air bag may thereby be deployed together with the exterior body component without being restrained by the vehicle body.

In an example, the second portion may be configured as a cover of the first portion when the air bag is in the uninflated state. Thereby, the first portion may be covered by the second portion. In particular, the configuration of the second portion as a cover may be such that it hides the first portion behind it. Thereby, the first portion may be non-visible, i.e., when looking at the vehicle body or vehicle. This prevents tampering with the air bag and allows for flexibility in designing the vehicle body.

In an example, the second portion may be configured to be deformed when the air bag is inflated such that the second portion partially forms the outer surface of the air bag in the inflated state of the air bag. Also, or alternatively, the second portion may be configured to be deformed upon impact, e.g., by a vulnerable road user. The deformation may be elastic and/or plastic deformation. For this purpose, the second portion may have a low stiffness and/or low rigidity. For example, the second portion may be made from a thin layer or sheet of material, e.g., with a thickness in the range of 0.3 mm to 0.8 mm, such that it may deform easily by the force of the air bag when it is being inflated in a way that it corresponds at least partially to the shape of the outer surface of the first portion of the inflated air bag, e.g., a round shape. Thereby, the second portion may have a different shape in the uninflated state of the air bag. However, once the air bag is deployed, the second portion will correspond at least partially to the shape of the outer surface of the inflated air bag, thereby being safe to any vulnerable road user that may impact the exterior body component and providing an additional cushioning zone, in particular by virtue of being a thin layer or sheet of material and being elastically and/or plastically deformable such that it may smoothly absorb an impacting force of a vulnerable road user.

In an example, the first portion may be arranged directly adjacent to the second portion in the uninflated state of the air bag. Accordingly, there may be no other parts or components between the second portion configured as the exterior body component and the first portion, which may otherwise obstruct the deployment of the air bag or add further weight and costs to the air bag. For example, the air bag may be free of a cover, e.g., made of plastic, which would cover the air bag or first portion, e.g., to protect it from being damaged by water. Such cover may not be necessary when using a metal air bag or at least metal first portion. Also, it may not be necessary to use a cover with a predetermined breaking point or similar to break the cover and thereby eject the air bag therethrough.

In an example, at least one of the first portion and the second portion may comprise sheet material having a thickness in the range of 0.3 mm to 0.8 mm, in particular in the range of 0.3 mm to 0.5 mm. It has been found that using one or more sheet materials for the air bag with these specific ranges provides for a very durable and light weight air bag that can absorb forces from impacts with vulnerable road users very well.

In an example, the first portion may be folded in the uninflated state of the air bag. This has been found to be a particularly advantageous way of providing the air bag in the uninflated state for saving space behind the exterior body component, where the first portion may be arranged, to provide a compact arrangement of the air bag. Also, particularly when folded, the first portion may be attached at its folds to the exterior body component and/or at least one internal body component, which proved advantageous for manufacturing and securing the parts to each other. Alternatively, the first portion, in an uninflated state of the air bag, may be rolled, for example.

In an example, the first portion may be configured elastic such that it stretches when the air bag is inflated. Similarly, the second portion may be elastic such that it also stretches when the air bag is inflated. However, the second portion may be less elastic than the first portion.

In an example, the second portion may comprise at least one of a metal material and a fiber-reinforced plastic material. In particular, the second portion may be made from at least one of a metal material and a fiber-reinforced plastic material. The metal material may be aluminum or steel, for example. The fiber-reinforced plastic material may be a carbon fiber material, for example. Similarly, the first portion may be made from metal, e.g., aluminum. This provides for a lightweight air bag and enables a very compact design with relatively little stiffness such that the air bag may absorb impacting forces in a smooth manner.

Further, the second portion may comprise a paint or color. The paint or color may correspond to a paint or color of the rest of the vehicle body, i.e., one or more further exterior body components.

According to a second aspect, there is provided an air bag arrangement comprising the air bag of the first aspect of this disclosure and at least one interior body component for the vehicle body. The second portion and the at least one interior body component may form a space therebetween, in which the first portion may be arranged in the uninflated state of the air bag.

The at least one interior body component may be non-visible, i.e., when looking at the vehicle body or vehicle. Accordingly, the interior body component may be referred to as a non-visible body component. Similarly, the space between the exterior body component and the interior body component may be non-visible and, the second portion of the air bag arranged therein, may be non-visible.

In an example, the at least one interior body component may have a larger stiffness than the exterior body component. Accordingly, the at least one interior body component may provide rigidity to the vehicle body at the location of the air bag, e.g., at the A-pillar structure, whereas the exterior body component may have a comparatively low stiffness to prevent injuries of vulnerable road users upon impact therewith, and even act as further cushioning zone of the air bag as described above.

In an example, the first portion may be at least partially attached to the at least one interior body component. Thereby, the air bag may be secured in its positioning relative to the vehicle body, e.g., at the A-pillar structure, when being inflated.

In an example, the air bag arrangement may further comprise an inflation device for inflating the air bag. The inflation device may be a gas generator, for example. The inflation device may be configured to inflate the air bag upon receiving a signal indicative of a frontal collision of the vehicle, in particular from a collision detection system. For this purpose, the air bag arrangement or the vehicle may comprise the collision detection system, e.g., comprising a collision sensor or crash sensor, generating the signal upon or before the vehicle impacts another road user, in particular a vulnerable road user such as a pedestrian or cyclist. The signal may be generated at the time of collision or, in other words, impact or, alternatively, before the time of collision, i.e., preemptive, when a collision or impact is immanent. This may be done when the detection system comprises a radar, camera, lidar and/or distance sensors to detect an immanent collision or impact with a road user.

According to a third aspect of this disclosure, there is provided a vehicle comprising the air bag arrangement of the first aspect. The exterior body component may be part of the vehicle body of the vehicle.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a top view on a vehicle;
- Figure 2: shows a perspective view on an A-pillar structure of a vehicle body of the vehicle of Fig. 1;
- Figure 3: shows a cross-sectional view of at least part of the A-pillar structure of Fig. 2 comprising an air bag arrangement with an air bag thereof being in an uninflated state;
- Figure 4: shows the air bag arrangement of the A-pillar structure of Fig. 3 with the air bag thereof being in an inflated state; and
- Figure 5: shows an alternative air bag arrangement of the A-pillar structure of Fig. 3 with the air bag thereof being in the inflated state.

### DETAILED DESCRIPTION

The Figures are merely schematic representations and serve only to illustrate examples of the disclosure. Identical or equivalent elements are in principle provided with the same reference signs.

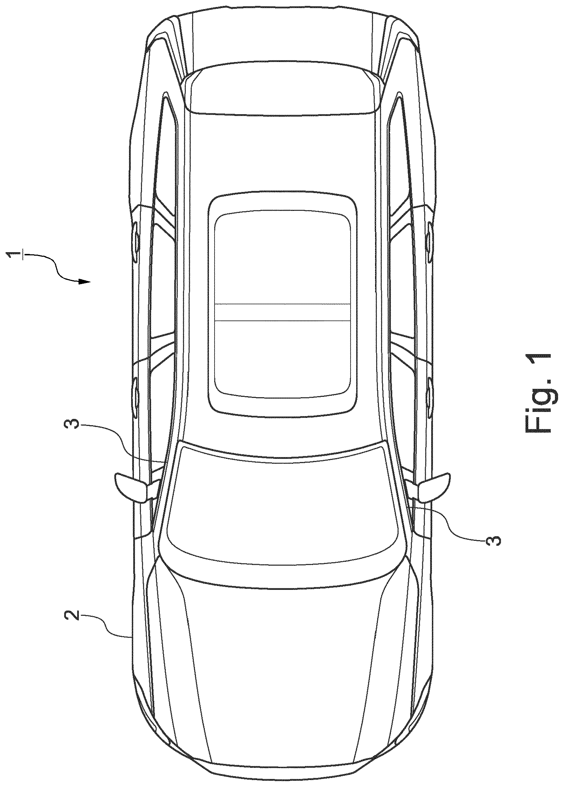

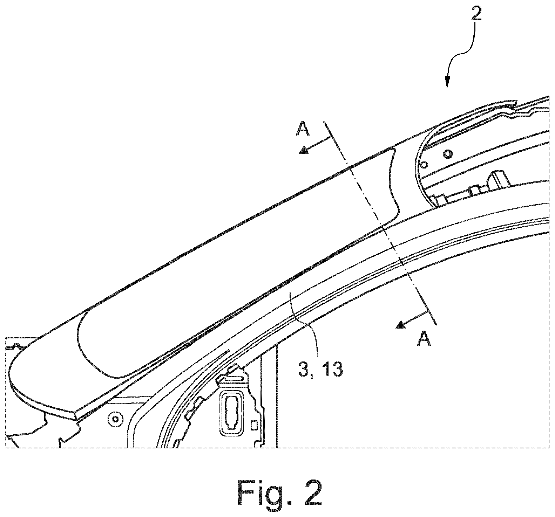

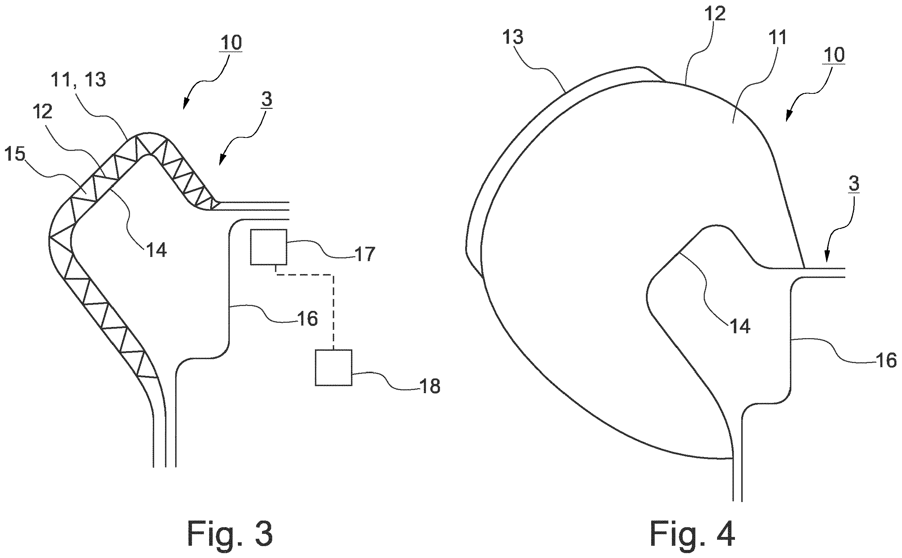

Figure 1 shows a vehicle 1 having a vehicle body 2 comprising two A-pillar structures 3. Figure 2 shows one of the two A-pillar structures 3 in a perspective view of a part of the vehicle body 2 of the vehicle 1 of Fig. 1. The line A-A indicates a cut through at least a part of the A-pillar structure 3, the cross-sectional view along line A-A being shown in Fig. 3.

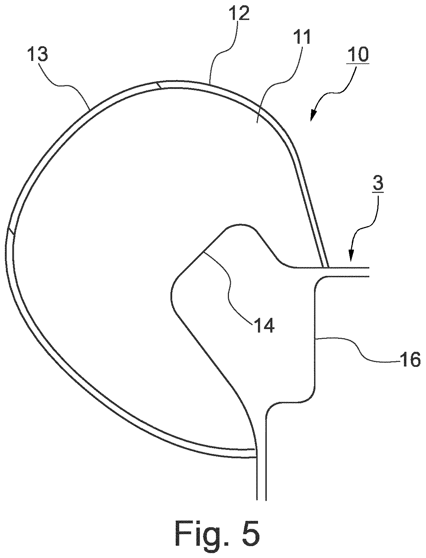

As seen in Fig. 3, the A-pillar structure 3 of the vehicle body 2 comprises an air bag arrangement 10. The air bag arrangement 10 comprises an air bag 11, which may at least partially, e.g., with its first portion 12 and/or with its second portion 13, be made from a metal material, such as aluminum, for example. In particular, the air bag 11, or at least the first portion 12 and optionally the second portion 13 thereof, may be made from one or more metal sheets, which may have a thickness in the range of 0.3 mm to 0.8 mm, for example. The air bag 11 is shown in an uninflated state in Fig. 3 and is shown in an inflated state in Fig. 4. An alternative variant of the air bag 11 in the inflated state is shown in Fig. 5.

The first portion 12 is located behind an exterior body component of the A-pillar structure 3 of the vehicle body 2, which is formed by the second portion 13 of the air bag 11. The exterior body component is visible when looking at the vehicle body 2 or the vehicle 1. The exterior body component as configuration of the second portion 13 also forms part of the air bag arrangement 10. A space 15 is formed between the exterior body component or, in other words, second portion 13 and a first interior body component 14, which may have a larger stiffness and/or rigidity than the exterior body component. The interior body component 14 may be non-visible when looking at the vehicle body 2 or the vehicle 1. The air bag 11 may be folded or rolled inside the space 15. A second interior body component 16, which may also be stiffer than the exterior body component, is attached to the first interior body component 14. The second portion 13 may be attached to the first interior body component 14. The first portion 12 may be attached, e.g., adhered or welded, to the second portion 13 and/or to the first interior body component 14.

The air bag arrangement 10 may further comprise an inflation device 17, which may be a gas generator, for example, for inflating the air bag 11 as shown in Fig. 4. Further, the air bag arrangement 10 may comprise a collision detection system 18, which may send a signal indicative of a frontal collision or impact of the vehicle 1, in particular with a vulnerable road user, to the inflation device 17, which may inflate the air bag 11 as shown in Fig. 4 upon receival of the signal.

As shown in Fig. 4, the second portion 13 configured as the exterior body component may be a component separate from the first portion 12. For example, the second portion 13 may have a greater material thickness than the first portion 12 and/or it may be made from a different material, e.g., from a fiber-reinforced plastic material. The second portion 13 may still attached to the first portion 12 of the air bag 11 even after the air bag 11 is inflated or, in other words, deployed. The exterior body component may be elastically and/or plastically deformed due to the inflation of the air bag 11 so as to correspond at least partially in shape to an outer surface of the air bag 11 in the inflated state. Thereby, and optionally with its relatively lower stiffness compared to the interior body components 14, 16, the exterior body component may provide a further cushioning zone for a vulnerable road user upon impact with the air bag 11, where the exterior body component may form a part thereof.

As shown in Fig. 5, the first portion 12 and the second portion 13 may also be made from one piece or, in other words, as one component instead of separate components, for example. Here, the first portion 12 and the second portion 13 are shown with lines inside the air bag 11 separating the respective portions 12, 13 from one another to exemplary illustrate the second portion 13 in its size forming the exterior body component for the vehicle body 2. In this case, both portions 12, 13 may comprise metal or be made from metal, e.g., aluminum.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: vehicle
- 2: vehicle body
- 3: A-pillar structure
- 10: air bag arrangement
- 11: air bag
- 12: first portion
- 13: second portion
- 14: first interior body component
- 15: space
- 16: second interior body component
- 17: inflation device
- 18: collision detection system

## Claims

1. An air bag (11) for a vehicle (1), the air bag (11) being inflatable from an uninflated state to an inflated state, the air bag (11) comprising a first portion (12) and a second portion (13), the first portion (12) and the second portion (13) being configured to form an outer surface of the air bag (11) in the inflated state of the air bag (11), the first portion (12) comprising a metal material, and the second portion (13) being configured as an exterior body component for a vehicle body (2) of the vehicle (1) in the uninflated state of the air bag (11).

2. The air bag (11) of claim 1, the second portion (13) being configured as an exterior body component for an A-pillar structure (3) of the vehicle body (2).

3. The air bag (11) of any one of the previous claims, the first portion (12) and the second portion (13) being configured as respectively separate components.

4. The air bag (11) of any one of the previous claims, the second portion (13) being configured as a cover of the first portion (12) when the air bag (11) is in the uninflated state.

5. The air bag (11) of claim 4, the second portion (13) being configured to be deformed when the air bag (11) is in the inflated state such that the second portion (13) partially forms the outer surface of the air bag (11) in the inflated state of the air bag (11).

6. The air bag (11) of any one of the previous claims, the first portion (12) being arranged directly adjacent to the second portion (13) in the uninflated state of the air bag (11).

7. The air bag (11) of any one of the previous claims, at least one of the first portion (12) and the second portion (13) comprising sheet material having a thickness in the range of 0.3 mm to 0.8 mm.

8. The air bag (11) of any one of the previous claims, the first portion (12) being folded in the uninflated state of the air bag (11).

9. The air bag (11) of any one of the previous claims, the first portion (12) being configured elastic such that it stretches when the air bag (11) is inflated.

10. The air bag (11) of any one of the previous claims, the second portion (13) comprising at least one of a fiber-reinforced plastic material and a metal material.

11. An air bag arrangement (10) comprising the air bag (11) of any one of the previous claims and at least one interior body component (14, 16) for the vehicle body (2), the second portion (13) and the at least one interior body component (14, 16) forming a space (15) therebetween, in which the first portion (12) is arranged in the uninflated state of the air bag (11).

12. The air bag arrangement (10) of claim 11, the at least one interior body component (14, 16) having a larger stiffness than the second portion (13).

13. The air bag arrangement (10) of claim 12 or 13, the first portion (12) being attached to the at least one interior body component (14, 16).

14. The air bag arrangement (10) of any one of claims 11 to 13, the air bag arrangement (10) further comprising an inflation device (17) for inflating the air bag (11) and a collision detection system (18), the inflation device (17) being configured to inflate the air bag (11) upon receiving a signal indicative of a frontal collision of the vehicle (1) from the collision detection system (18).

15. A vehicle (1) comprising the air bag (11) of any one of claims 1 to 10 or the air bag arrangement (10) of any one of claims 11 to 14.

## Amended claims

### Amended claims in accordance with Rule 137(2) EPC.

1. An air bag (11) for a vehicle (1), the air bag (11) being inflatable from an uninflated state to an inflated state, the air bag (11) comprising a first portion (12) and a second portion (13), the first portion (12) and the second portion (13) being configured to form an outer surface of the air bag (11) in the inflated state of the air bag (11), the first portion (12) comprising a metal material, and the second portion (13) being configured as an exterior body component for a vehicle body (2) of the vehicle (1) in the uninflated state of the air bag (11), wherein one or both of the following holds true:
- the first portion (12) is being configured elastic such that it stretches when the air bag (11) is inflated,
- the first portion (12) has a lower material thickness than the second portion (13).

2. The air bag (11) of claim 1, the second portion (13) being configured as an exterior body component for an A-pillar structure (3) of the vehicle body (2).

3. The air bag (11) of any one of the previous claims, the first portion (12) and the second portion (13) being configured as respectively separate components.

4. The air bag (11) of any one of the previous claims, the second portion (13) being configured as a cover of the first portion (12) when the air bag (11) is in the uninflated state.

5. The air bag (11) of claim 4, the second portion (13) being configured to be deformed when the air bag (11) is in the inflated state such that the second portion (13) partially forms the outer surface of the air bag (11) in the inflated state of the air bag (11).

6. The air bag (11) of any one of the previous claims, the first portion (12) being arranged directly adjacent to the second portion (13) in the uninflated state of the air bag (11).

7. The air bag (11) of any one of the previous claims, at least one of the first portion (12) and the second portion (13) comprising sheet material having a thickness in the range of 0.3 mm to 0.8 mm.

8. The air bag (11) of any one of the previous claims, the first portion (12) being folded in the uninflated state of the air bag (11).

9. The air bag (11) of any one of the previous claims, the second portion (13) comprising at least one of a fiber-reinforced plastic material and a metal material.

10. An air bag arrangement (10) comprising the air bag (11) of any one of the previous claims and at least one interior body component (14, 16) for the vehicle body (2), the second portion (13) and the at least one interior body component (14, 16) forming a space (15) therebetween, in which the first portion (12) is arranged in the uninflated state of the air bag (11).

11. The air bag arrangement (10) of claim 10, the at least one interior body component (14, 16) having a larger stiffness than the second portion (13).

12. The air bag arrangement (10) of claim 10 or 11, the first portion (12) being attached to the at least one interior body component (14, 16).

13. The air bag arrangement (10) of any one of claims 10 to 12, the air bag arrangement (10) further comprising an inflation device (17) for inflating the air bag (11) and a collision detection system (18), the inflation device (17) being configured to inflate the air bag (11) upon receiving a signal indicative of a frontal collision of the vehicle (1) from the collision detection system (18).

14. A vehicle (1) comprising the air bag (11) of any one of claims 1 to 9 or the air bag arrangement (10) of any one of claims 10 to 13.
